# EUROPEAN PATENT APPLICATION

(11) **EP 3 620 231 A1**
(43) Date of publication of application: **11.03.2020**
(21) Application number: 18837285.8
(22) Date of filing: 30.05.2018
(51) Int. Cl.: B01J 8/02

(54) **PLATE-TYPE MODULAR TEMPERATURE CONTROL REACTOR**

(30) Priority: 24.07.2017 CN 201710605985
(71) Applicant: Athco Engineering (Shanghai) Co., Ltd., Shanghai 201202 (CN)
(72) Inventor: YU, Shengying, Shanghai 200231 (CN); LIU, Yingmin, Beijing 100083 (CN); NI, Haoyin, Shanghai 201101 (CN); XU, Yueting, Shanghai (CN); FANG, Chenchen, Shanghai 201102 (CN)
(74) Representative: Sun, Yiming
(86) International application number: PCT/CN2018/088927
(87) International publication number: WO 2019/019794

(57) **Abstract**

A modular plate reactor comprises a shell, temperature-control modules and gratings, wherein a reaction chamber is formed in the shell; the temperature-control modules are arranged in the reaction chamber and each comprise at least two temperature-control board pairs, and each temperature-control board pair includes two temperature-control boards having side edges fixed together to form a cavity provided with an upper opening and a lower opening; the upper ends of the cavities are communicated with a heat medium inlet in the shell, and the lower ends of the cavities are communicated with a heat medium outlet in the shell; catalysts are contained between the adjacent temperature-control board pairs; the gratings are detachably connected to the bottoms of the temperature-control modules, located between the adjacent temperature-control board pairs and used for supporting the catalysts.

## Description

### FIELD OF THE INVENTION

The disclosure relates to the technical field of chemical reaction equipment, in particular to a temperature-control modular plate reactor.

### BACKGROUND OF THE INVENTION

Most reactions in chemical engineering are accompanied by heat absorption and release. In certain intense exothermic reactions, shell-and-tube reactors are used as traditional stationary-bed chemical reactors. For industrial mass production, fluid reactants react in catalyst tubes which are typically charged with multi-phase granular catalysts, and heat released during the reaction is indirectly removed by means of heat carriers around the catalyst tubes.

Besides, plate reactors using a heat plate in a geometric shape as a heat transmitter are also adopted and typically comprise a continuous catalyst bed in which the plate-type heat transmitter is inlaid.

The shell-and-tube reactors in a multi-tube geometric shape have the following shortcomings: due to the presence of a stationary tube plate, operations involved in catalyst loading and unloading are complex and time-consuming, which in turn leads to production losses; and meanwhile, due to the limitations of the shell-and-tube reactors during heat transfer In order to meet the requirement of heat transfer, most shell-and-tube reactors have a large weight and size, thereby being inconvenient to manufacture and transport.

Isothermal plate reactors overcome certain shortcomings of shell-and-tube radial-flow reactors. However, such reactors have the following drawbacks: during large-scale industrial production, non-uniform fluid distribution in the plate structure may directly result in a non-uniform heat-exchange effect, which in turn leads to non-uniform temperature distribution of a reaction bed; moreover, the bottom of a catalyst chamber of the isothermal plate reactors is blocked by a large grating which has to be removed when catalysts are unloaded, and the catalysts are completely discharged and cannot be partially replaced, so that the flexibility is poor; the isothermal plate reactors cannot adapt to a large flow rate of heat-transfer media due to the dense configuration of heat-transfer medium inlet/outlet branches and the limitations of the tube diameter; and due to the grating at the bottom of the plate reactors, it is extremely difficult to discharge catalysts and to perform inspection and maintenance.

### BRIEF SUMMARY OF THE INVENTION

This application provides a temperature-control modular plate reactor which allows catalysts in a reaction chamber to be partially loaded and unloaded conveniently and is good in flexibility and is beneficial to inspection and maintenance.

A temperature-control modular plate reactor provided by this application comprises:
A shell, wherein a reaction chamber is formed in the shell;

Temperature-control modules arranged in the reaction chamber, wherein each temperature-control module comprises at least two temperature-control board pairs, each temperature-control board pair includes two temperature-control boards, the side edges of the two temperature-control boards of each temperature-control board pair are fixed together to form a cavity having an upper opening and a lower opening, the upper end of the cavity is communicated with a heat medium inlet in the shell, the lower end of the cavity is communicated with a heat medium outlet in the shell, and catalysts are contained in spaces between the adjacent temperature-control board pairs; and

Gratings, wherein the gratings are detachably connected to the bottoms of the temperature-control modules, located between the adjacent temperature-control board pairs, and used for supporting the catalysts.

In one embodiment, each temperature control module further comprises a frame including at least two thick boards, wherein every two of the at least two thick boards are connected and are arranged in parallel with the central axis of the shell, and the temperature-control board pairs are fixed to the frame.

In one embodiment, each temperature control module further comprises at least one fixing frame provided with protrusion pairs, wherein the distance between the protrusion pairs is matched with the width of the temperature-control board pairs; through holes are formed in the temperature-control board pairs; and after the fixing frame sequentially penetrates through the through holes of the at least two temperature-control board pairs, the temperature-control board pairs are clamped between the protrusion pairs.

In one embodiment, the temperature-control modular plate reactor further comprises upper board seam tubes and lower board seam tubes, wherein the upper board seam tubes are perpendicular to the temperature-control board pairs, inlaid in the upper ends of the temperature-control board pairs, and communicated with the heat medium inlet, and the lower board seam tubes are perpendicular to the temperature-control board pairs, inlaid in the lower ends of the temperature-control board pairs, and communicated with the heat medium outlet.

In one embodiment, the temperature-control modular plate reactor further comprises a first annular tube arranged at the upper end of the reaction chamber and a second annular tube arranged at the lower end of the reaction chamber, the first annular tube is communicated with the heat medium inlet and is communicated with the upper board seam tubes through first branch tubes, and the second annular tube is communicated with the heat medium outlet and is communicated with the lower board seam tubes through second branch tubes.

In one embodiment, the branch tubes are coil tubes.

In one embodiment, each grating comprises an arc section and a straight section, wherein every two adjacent straight sections are connected through one arc section, and the number of the arc sections is consistent with that of the lower board seam tubes; and the gratings are arranged above the lower board seam tubes, the arc sections are cooperatively fixed to the lower board seam tubes, and the ends of the straight sections are fixed to the temperature-control modules.

In one embodiment, fixing plates are arranged at the two ends of each straight section and are fixed to the temperature-control modules with bolts.

In one embodiment, the temperature-control modular plate reactor further comprises a cover plate arranged around the temperature-control modules and used for covering gaps between the temperature-control modules and the shell.

In one embodiment, the temperature-control modular plate reactor further comprises a curved tube having an end stretching into the cover plate from below and an end stretching out of the shell, and the curved tube is provided with a switch valve and is used for injecting an inert gas into the reaction chamber.

The module plate reactor provided by this application comprises a shell, temperature-control modules and gratings, wherein a reaction chamber is formed in the shell; the temperature-control modules are arranged in the reaction chamber and each comprises at least two temperature-control board pairs, and each temperature-control board pair includes two temperature-control boards having side edges fixed together to form a cavity provided with an upper opening and a lower opening; the upper ends of the cavities are communicated with a heat medium inlet in the shell, and the lower ends of the cavities are communicated with a heat medium outlet in the shell; catalysts are contained between the adjacent temperature-control board pairs; and the gratings are detachably connected to the bottoms of the temperature-control modules, located between the adjacent temperature-control board pairs and used for supporting the catalysts. Through the configuration of the gratings, the catalysts between the adjacent temperature-control board pairs can be loaded and unloaded independently, so that the flexibility of the reactor is improved, the problem of difficult inspection and maintenance of plate reactors in related arts is solved, and workers can conduct local detection and maintenance and local replacement of the catalyst conveniently.

### BRIEF DESCRIPTION OF THE SEVERAL VIEWS OF THE DRAWINGS

FIG. 1 is a structural diagram of a modular plate reactor in one embodiment of this application;
FIG. 2 is a structural diagram of temperature-control board pairs and a fixing frame in the embodiment of this application;
FIG. 3 is a structural diagram of a grating in the embodiment of this application;
FIG. 4 is a front view of the grating in the embodiment of this application;
FIG. 5 is a top view of the grating in the embodiment of this application;
FIG. 6 is a structural diagram of temperature-control board pairs and a frame in the embodiment of this application;
FIG. 7 is a first distribution diagram of temperature-control modules in a reaction chamber in the embodiment of this application;
FIG. 8 is a second distribution diagram of the temperature-control modules in the reaction chamber in the embodiment of this application;
FIG. 9 is a third distribution diagram of the temperature-control modules in the reaction chamber in the embodiment of this application;
FIG. 10 is a fourth distribution diagram of the temperature-control modules in the reaction chamber in the embodiment of this application;
FIG. 11 is a fifth distribution diagram of the temperature control modules in the reaction chamber in the embodiment of this application;
FIG. 12 is a sixth distribution diagram of the temperature-control modules in the reaction chamber in the embodiment of this application;
FIG. 13 is a seventh distribution diagram of the temperature-control modules in the reaction chamber in the embodiment of this application.

### Reference Signs:

1, shell; 11, heat medium inlet; 12, heat medium outlet; 13, reactant gas inlet; 14, reactant gas outlet; 15, manhole; 2, reaction chamber;
3, temperature-control module; 31, temperature-control board pair; 311, temperature-control board; 312, cavity; 32, frame; 321, thick board; 33, fixing fame; 331, protrusion pair;
4, grating; 41, arc section; 42, straight section;
51, first annular tube; 52, second annular tube; 53, first branch tube; 54, second branch tube; 6, cover plate; 7, curved tube.

### DETAILED DESCRIPTION OF THE INVENTION

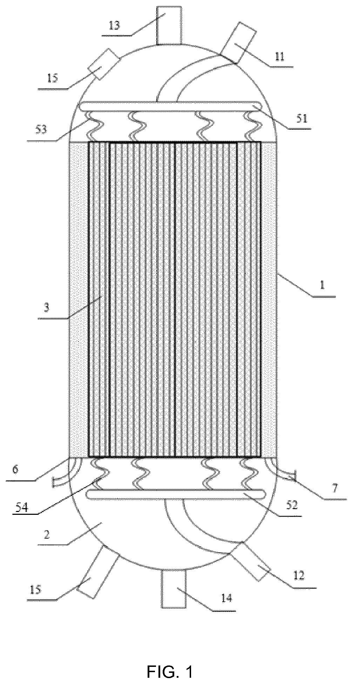

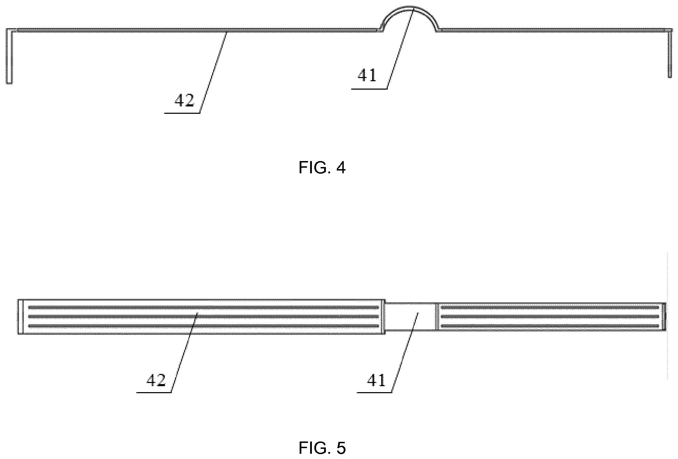

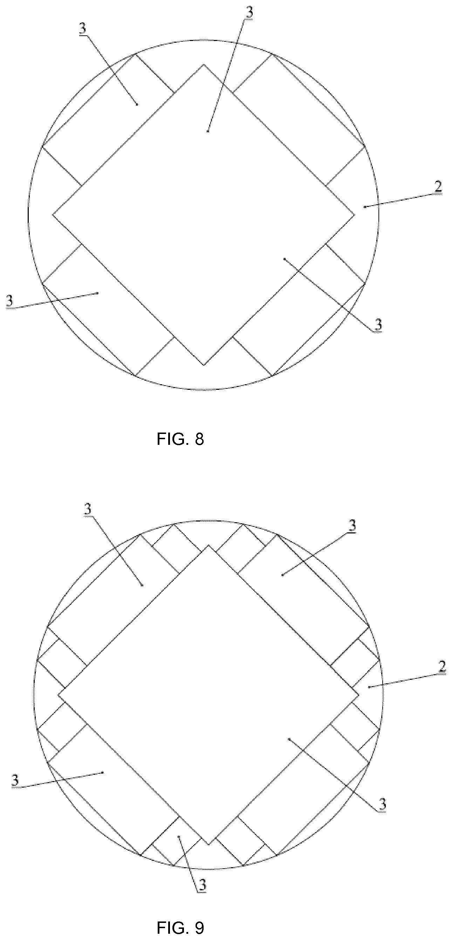

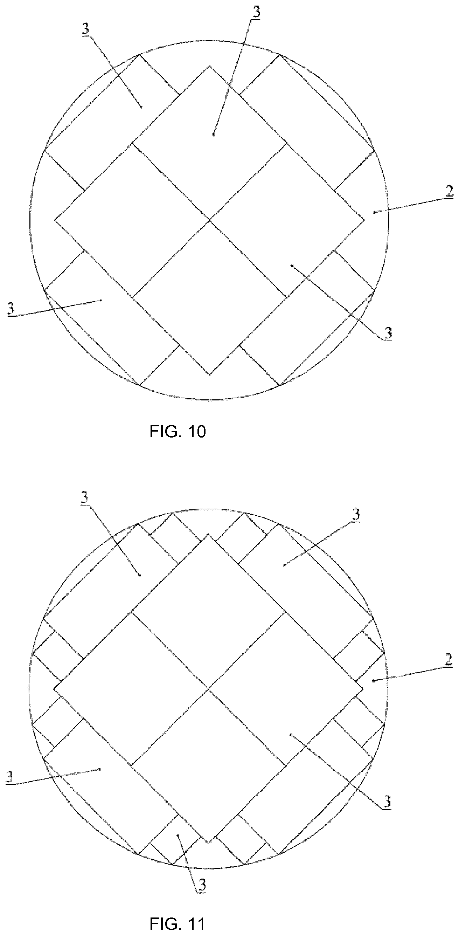

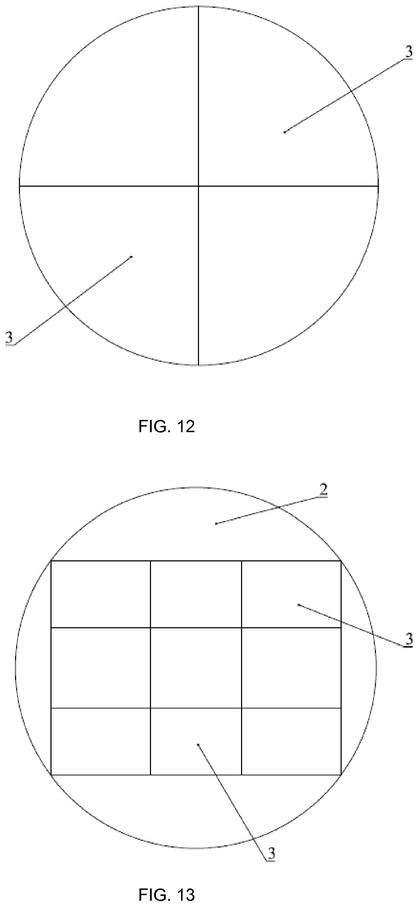

As shown in FIG. 1-FIG. 13, this embodiment provides a modular plate reactor which comprises a shell 1, temperature-control modules 3, and gratings 4, wherein a reaction chamber 2 is formed in the shell 1, and the temperature-control modules 3 are arranged in the reaction chamber 2. Each temperature-control module 3 comprises at least two temperature-control board pairs 31. Each temperature-control board pair 31 includes two temperature-control boards 311, wherein the side edges of the two temperature-control boards 311 are fixedly connected to form a cavity 312 which is provided with an upper opening and a lower opening. The upper ends of the cavities 312 are communicated with a heat medium inlet 11 formed in the shell 1, the lower ends of the cavities 312 are communicated with a heat medium outlet 12 formed in the shell 1, and catalysts are contained in spaces between the adjacent temperature-control board pairs 31. The gratings 4 are detachably connected to the bottoms of the temperature-control modules 3, located between the adjacent temperature-control board pairs 31, and used for supporting the catalysts. Through the configuration of the gratings 4, the catalysts between the adjacent temperature-control board pairs 31 can be loaded and unloaded independently, so that the flexibility of the reactor is improved, the problem of difficult inspection and maintenance of plate reactors in related arts is solved, and workers can conduct local detection and maintenance and local replacement of the catalysts conveniently.

As a large chemical plant, the modular plate reactor should allow workers to enter the interior to conduct configuration, inspection and maintenance of components. As shown in FIG. 1, manholes 15 are respectively formed in the upper end and the lower end of the shell 1, and workers enter the interior of the reactor via the manholes 15 to conduct operations.

The modular plate reactor comprises a main part, an upper head connected with the upper end of the main part, and a lower head connected with the lower end of the main part, wherein the upper head, the lower head and the main part constitute the shell 1, and the reaction chamber 2 is formed in the shell 1. Through the configuration of the upper head and the lower head, each structure inside the shell 1 can be arranged conveniently; and the reaction chamber 2 having the interior sealed is formed after the upper head and the lower head are fixed to the main part.

A reactant gas inlet and the heat medium inlet 11 are formed in the upper end of the shell 1, and a reactant gas outlet 14 and the heat medium outlet 12 are formed in the lower end of the shell 1. During the reaction, the spaces between the adjacent temperature-control board pairs 31 are filled with catalysts, a reactant gas is injected into the reaction chamber 2 via the reactant gas inlet, then flows from top to bottom to sufficiently react under the effect of the catalysts, and is finally discharged out of the reactor via the reactant gas outlet. In this process, a heat medium is injected into the cavities 312 in the temperature-control board pairs 31 via the heat medium inlet 11, absorbs or releases heat in the reaction process, and then flows out via the heat medium outlet 12, so that the reaction can be carried out more smoothly.

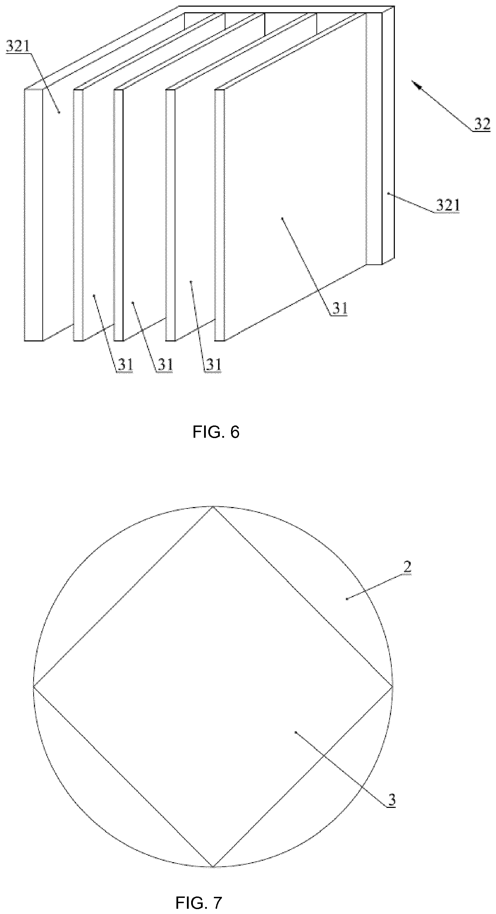

FIG. 6 is a structural diagram of the temperature-control board pairs and a frame in this embodiment. As shown in FIG. 6, each temperature-control module 3 further comprises a frame 32 used for fixing the temperature-control board pairs 31, wherein the frame 32 comprises at least two thick boards 321, every two of the at least two thick boards 321 are connected and are arranged in parallel with the central axis of the shell 1, and the temperature-control board pairs 31 are fixed to the frame 32. Particularly, the temperature-control board pairs 31 are perpendicularly fixed to one thick board 321 and are parallel to the other thick board 321, thereby being fixed to the frame 32. The temperature-control board pairs 31 are fixed to the frame 32 in a clamped manner. For instance, clamping grooves extending in the axial direction of the shell 1 are formed in the thick board 321 on one side of the frame 32, clamping blocks matched with the clamping grooves are arranged at the ends of the temperature-control board pairs 31, the clamping blocks of the temperature-control board pairs 31 slide into the clamping grooves from one end and are then cooperatively fixed in the clamping grooves, and the number of the clamping grooves in the thick board 321 corresponds to that of the temperature-control board pairs 31. Through the cooperation of the clamping blocks and the clamping grooves, fixation is convenient, the structure is simple, disassembly is convenient, and the installation difficulty can be lowered for workers. Or, the temperature-control board pairs 31 are fixed to the frame 32 by means of threaded connection to fulfill a reliable fixation effect and to facilitate operation.

In this embodiment, the temperature-control board pairs 31 are generally of a cuboid structure, and the multiple temperature-control board pairs 31 are identical in shape and size so as to form a large cuboid structure. In order to adapt to the shape of the multiple temperature-control board pairs 31, the frame 32 consists of two, three or four thick boards 321, wherein every two of the thick boards 321 are perpendicularly connected to form the frame 32 with an L-shaped or U-shaped cross section, and thus, the multiple temperature-control board pairs 31 are fixed. Or, the multiple temperature-control pairs 31 are different in shape and size to form, for instance, a polygonal or sectorial structure, and in order to adapt to the shape of the multiple temperature-control board pairs 31, the frame 32 consists of a plurality of thick boards 321 in a corresponding shape so as to fix the temperature-control board pairs 31. Through the thick boards 321, the frame 32 can bear the multiple temperature-control board pairs 31, the strength of the frame 32 is improved, and damage to the frame 32 caused by overload is avoided.

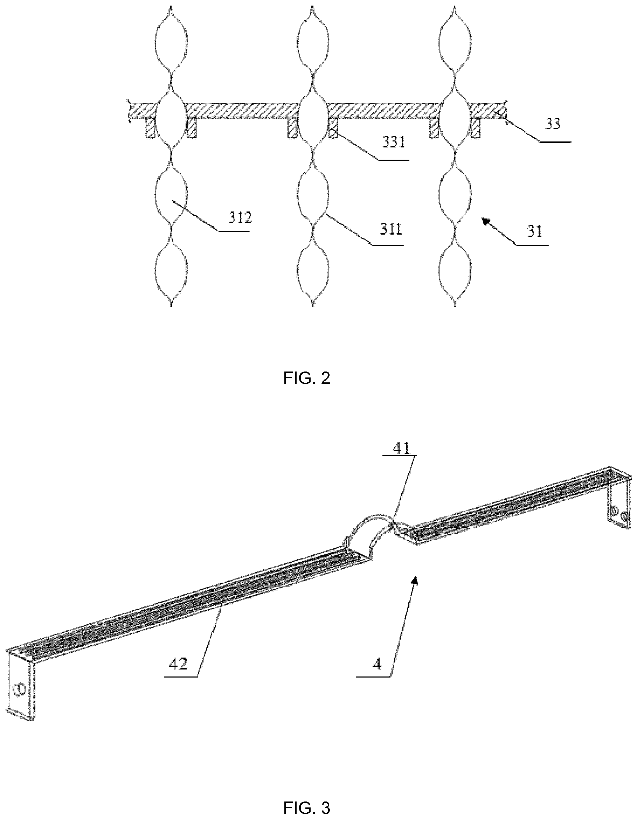

In the reaction process, the heat medium is continuously injected into the cavities 312 of the temperature-control board pairs 31 at a high flow rate. Under the high flow rate, the heat medium violently impacts the temperature-control board pairs 31 to result in vibrations of the temperature-control board pairs 31. In order to protect the internal structures of the reactor against damage caused by the vibrations of the temperature-control board pairs 31, each temperature-control module 3 in this embodiment further comprises at least one fixing frame 33. As shown in FIG. 2, the fixing frame 33 is provided with protrusion pairs 331, and the distance between the protrusion pairs 331 is matched with the width of the temperature-control board pairs 31; and the temperature-control board pairs 31 are provided with through holes, and after the fixing frame 33 sequentially penetrates through the through holes of the at least two temperature-control board pairs 31, the temperature-control board pairs 31 are clamped between the protrusion pairs 331. The fixing frame 33 is able to support and fix the temperature-control board pairs 31 to prevent vibrations of the temperature-control board pairs 31, thus, preventing damage to the internal structures of the reactor. Or, a plurality of fixing frames 33 are configured and are distributed in at least one of the horizontal length direction and the vertical height direction of the temperature-control board pairs 31, so that the temperature-control board pairs 31 are better supported.

In one embodiment, the size of the through holes formed in the temperature-control board pairs 31 can be adjusted according to the size of the temperature-control board pairs 31 and the size of catalyst particles. For instance, the through holes are rectangular holes or elliptical holes to allow the fixing frame 33 provided with the protrusion pairs 331 to penetrate through easily. The through holes have a width of 5mm-30mm and a length of 8mm-70mm, and the size of the through holes is determined as actually needed as long as the installation requirement of the fixing frame 33 is met and catalyst leakage is avoided. In order to make sure that the temperature-control board pairs 31 can be stably fixed by the fixing frame 33 under the impact of the heat medium, the distance between the protrusion pairs 331 is matched with the width of the temperature-control board pairs 31, so that the temperature-control board pairs 31 are clamped and fixed. In order to prevent the reduction of the strength and service life of the temperature-control board pairs 31 caused by the formation of a plurality of through holes, used for configuring a plurality of fixing frames 33, in the temperature-control board pairs 31, the distance between the through holes in the temperature-control board pairs 31 can be set to 50cm-150cm to improve the supporting effect of the fixing frame 33 on the temperature-control board pairs 31 and to prevent the reduction of the strength of the temperature-control board pairs 31 caused by excessively-dense distribution of the through holes.

In the reaction process accompanied by absorption or release of a large quantity of heat, if the heat medium circulates only in the cavities 312 of the temperature-control board pairs 31 and cannot reach the boundaries of the frame 32 (namely the thick boards 321), effective heat exchange cannot be realized, and the temperature-control effect is poor. In order to solve this problem, a temperature-control board 311 is arranged on the thick board 321 on the side, in parallel with the temperature-control board pairs 31, of the frame 32, wherein the two sides of the temperature-control board 311 are fixed to the thick board 321 to define a cavity 312 in which the heat medium is injected, so that the heat-exchange effect of the frame 32 is improved, the reaction temperature can also be well controlled on the edges of each temperature-control module 3, and the common problem of high-temperature creep caused by poor heat-exchange on the edges of existing plate reactors is solved. In order to make sure that the cavity 312 is defined by the corresponding thick board 321 of the frame 32 and the temperature-control board 311, the thick board 321 should not be smaller than the temperature-control board 311 so as to be matched with the temperature-control board 311.

Each temperature-control board pair 31 is composed of two temperature-control boards 311, wherein the temperature-control boards 311 are flat boards or curved boards, and the specific shape of the temperature-control boards 311 is determined according to the viscosity and nature of the heat medium as well as the pressure-bearing requirements of the temperature-control boards 311; the temperature-control boards 311 are fixed by welding to form the temperature-control board pair 31 having an upper end and a lower end respectively provided with one opening; the cavity 312 in the temperature-control board pair 31 serves as a heat medium channel; and the edges of the two temperature-control boards 311 are fixed by welding, or welding is carried out on at least one position of the middle of each of the two temperature-control boards 311, and the welding is spot welding, strip welding, triangular welding, rectangular welding, or welding in other special shapes as long as the welding positions are staggered to make sure that the surfaces of the temperature-control board pair 31 is alternately concave and convex. By adoption of the concave-convex shape, the contact area between the heat medium and the temperature-control board pairs 31 is enlarged, and a turbulent flow is generated to fulfill a better heat-exchange effect; and the catalysts which are generally granular can be mixed more uniformly by means of the concave-convex shape, and more catalysts can be stored in the spaces between the temperature-control board pairs 31 to promote the reaction. For the comprehensive consideration of catalyst consumption and heat medium consumption, the height of convexities of the temperature-control board pairs 31 is 1-10mm.

In this embodiment, the reactor further comprises upper board seam tubes and lower board seam tubes, wherein the upper board seam tubes are perpendicular to the temperature-control board pairs 31, inlaid in the upper ends of the temperature-control board pairs 31, and communicated with the heat medium inlet 11; and the lower board seam tubes are perpendicular to the temperature-control board pairs 31, inlaid in the lower ends of the temperature-control board pairs 31, and communicated with the heat medium outlet 12. The board seam tubes are configured to transfer the heat medium, so that the internal space of the reactor is saved, and the structure is simplified. For instance, the heat medium can be distributed more uniformly by means of the board seam tubes when injected at a high speed and high flow rate.

In one embodiment, the reactor further comprises a first annular tube 51 arranged at the upper end of the reaction chamber 2 and a second annular tube 52 arranged at the lower end of the reaction chamber 2, wherein the first annular tube 51 is communicated with the heat medium inlet 11 and is communicated with the upper board seam tubes through branch tubes 53, and the second annular tube 52 is communicated with the heat medium outlet 12 and is communicated with the lower board seam tubes through branch tubes 53. After entering the first annular tube 51 via the heat medium inlet 11, the heat medium is delivered into the upper board seam tubes via the corresponding branch tubes 53. The upper board seam tubes are perpendicular to the temperature-control board pairs 31 and are provided with through holes corresponding to the openings in the upper ends of the cavities 312 of the temperature-control board pairs 31. The heat medium in the upper annular tube is distributed into a plurality of parts of the upper board seam tubes through the first branch tubes 53 and then enters the corresponding cavities 312. After being subject to a heat-exchange reaction, the heat medium enters the lower board seam tubes via the through holes, corresponding to the openings in the lower ends of the cavities 312, formed in the lower board seam tubes, is converged into the second annular tube 52 through the second branch tubes 53 at the bottom end, and finally flows out via the heat medium outlet 12. Or, multiple upper board seam tubes and multiple lower board seam tubes are configured and are uniformly distributed, the heat medium is distributed by means of the first branch tubes 53 and is converged by means of the second branch tubes 54, so that uniform circulation of the heat medium in the cavity 312 of each temperature-control board pair 31 is guaranteed, and accordingly, the temperature control effect of each part in the reactor is guaranteed.

In one embodiment, the first branch tubes 53 and the second branch tubes 54 are coil tubes, which are uniformly distributed on the first annular tube 51 and the second annular tube 52 and are correspondingly connected to a plurality of parts of the board seam tubes, and the coil tubes can counteract part of impact from the heat medium and can reduce vibrations of the temperature-control board pairs 31 in the reactor to a certain extent, so that damage to multiple components in the reactor is avoided.

In this embodiment, the gratings 4 which can be independently assembled and disassembled are arranged between every two adjacent temperature-control board pairs 31. As shown in FIG. 3-FIG. 5, each grating 4 comprises arc sections 41 and straight sections 42, wherein every two adjacent straight sections 42 are connected through one arc section 41. The number of the arc sections 41 corresponds to that of the lower board seam tubes, and the gratings 4 are arranged above the lower board seam tubes and are matched with and fixed to the lower board seam tubes. The ends of the straight sections 42 are fixed to the temperature-control modules 3. The arc sections 41 of the gratings 4 can give way to the lower board seam tubes and can be matched with the lower board seam tubes to support and position the gratings 4, so that the bearing effect and fixing effect of the gratings 4 are improved, and deformation of the gratings 4 is avoided.

In this embodiment, two lower board seam tubes are configured, so that each grating 4 is corresponding provided with two arc sections 41 and three straight sections 42, wherein the two arc sections 41 are matched with the corresponding lower board seam tubes and are connected with the straight sections 42; fixing plates are arranged at the two ends of each straight section 42, the fixing plate at one end of each straight section 42 is fixed to the corresponding temperature-control module 3 with a bolt, and the fixing plate at the other end of each straight section is fixed to the fixing plate on another straight section 42; and the fixing plates on the arc sections 41 are fixed to the lower board seam tubes. By means of bolt connection, disassembly is convenient, and workers can dissemble, inspect and maintain local devices conveniently. For instance, when the grating 4 between two corresponding adjacent temperature-control board pairs 31 needs to be disassembled to discharge the catalysts between these two adjacent temperature-control board pairs 31, the straight section 42 between the two arc sections 41 is removed first to discharge most of the catalysts between the temperature-control board pairs 31, and then the bolt between the end of the straight section 42 and the corresponding temperature-control module 3 is removed to discharge the rest of the catalysts.

The gratings 4 are closely attached to the bottoms of the temperature-control modules 3 and are located above the lower board seam tubes, so that primary maintenance can be accessibly conducted without removing other components; and the multiple gratings 4 are not connected, so that the gratings and the catalysts can be replaced independently. The gratings 4 can also be detachably connected with the temperature-control modules 3 in other manners. For instance, the gratings 4 can be clamped and fixed on the temperature-control modules 3 through the cooperation between clamping grooves and clamping blocks as long as each grating 4 can be independently assembled and disassembled.

In one embodiment, the reactor further comprises a cover plate 6, wherein the cover plate 6 is arranged around the temperature-control modules 3 and is used for covering gaps between the temperature-control modules 3 and the shell 1. Other channels, except the temperature-control modules 3, in the reaction chamber 2 are blocked by the cover plate 6, so that the reactant gas entering the reaction chamber 2 via the reactant gas inlet 13 has to pass through the catalysts in the temperature-control modules 3 before being exhausted via the reactant gas outlet 14, thus, avoiding short circuits of the reactant gas and increasing the conversion rate of the reactant gas. The gaps formed between the temperature-control modules 3 and the shell 1 and located above the cover plate 6 can be filled with hybrid ceramic balls with different sizes, and after the big and small ceramic balls are mixed, the porosity in the reaction chamber 2 is further decreased, and the reactant gas naturally flows through the temperature-control modules 3 to react.

A curved tube 7 is connected to the cover plate 6 and has an end stretching into the cover plate 6 from below and an end stretching out of the shell 1, and the curved tube 7 is provided with a switch valve and is used for injecting an inert gas into the reaction chamber 2. Before the reaction, the switch valve is opened, and then the inert gas is injected into the reaction chamber 2 via the curved tube 7 to conduct purging, so that the activity of the catalysts is improved.

As shown in FIG. 7-FIG. 13, to fulfill better utilization of the internal space of the reactor, a plurality of temperature-control modules 3 are configured and are arrayed in various manners. For instance, the control modules 3 include a large-sized temperature-control module 3 and a plurality of small-sized temperature-control modules 3, wherein the large-sized temperature-control module 3 is arranged in the middle of the shell 1, and one small-sized temperature-control module 3 is placed in a gap between each of the four edges of the large-sized rectangular temperature-control module 3 and the shell 1. In this way, various configuration solutions can be obtained to make full use of the space in the reaction chamber 2 and to effectively use resources.

Clearly, the temperature-control modules 3 can also be sectorial, and multiple sectorial temperature-control modules 3 are spliced to form a cylinder placed in the reaction chamber 2. Or, multiple temperature-control modules 3 with the same size are arrayed in a matrix manner. The specific configuration manner of the temperature-control modules 3 is set as required, and this application has no limitation in this aspect.

### INDUSTRIAL PRACTICABILITY

According to the temperature-control modular plate reactor provided by the disclosure, the catalysts between adjacent temperature-control board pairs can be independently loaded or unloaded, so that the flexibility of the reactor is improved, the problem of difficult inspection and maintenance of plate reactors in related arts is solved, and workers can conduct local inspection and maintenance and local replacement of the catalysts conveniently.

## Claims

1. A temperature-control modular plate reactor, comprising:
a shell (1), wherein a reaction chamber (2) is formed in the shell (1);
temperature-control modules (3) arranged in the reaction chamber (2), wherein each said temperature-control module (3) comprises at least two temperature-control board pairs (31), each said temperature-control board pair (31) includes two temperature-control boards (311), side edges of the two temperature-control boards (311) of each said temperature-control board pair (31) are fixed together to form a cavity (312) having an upper opening and a lower opening, an upper end of the cavity (312) communicated with a heat medium inlet (11) in the shell (1), a lower end of the cavity (312) is communicated with a heat medium outlet (12) in the shell (1), and catalysts are contained in spaces between the adjacent temperature-control board pairs (31); and
gratings (4), wherein the gratings (4) are detachably connected to bottoms of the temperature-control modules (3), located between the adjacent temperature-control board pairs (31), and used for supporting the catalysts.

2. The temperature-control modular plate reactor according to claim 1, wherein each said temperature control module (3) further comprises a frame (32), wherein the frame (32) comprises at least two thick boards (321), every two of the at least two thick boards (321) are connected and are arranged in parallel with a central axis of the shell (1), and the temperature-control board pairs (31) are fixed to the frame (32).

3. The temperature-control modular plate reactor according to claim 1 or 2, wherein each said temperature control module (3) further comprises at least one fixing frame (33) provided with protrusion pairs (331), the distance between the protrusion pairs (331) is matched with a width of the temperature-control board pairs (31); and through holes are formed in the temperature-control board pairs (31), and after the fixing frame (33) sequentially penetrates through the through holes of the at least two temperature-control board pairs (31), the temperature-control board pairs (31) are clamped between the protrusion pairs (331).

4. The temperature-control modular plate reactor according to claim 1, 2, or 3, wherein the temperature-control modular plate reactor further comprises upper board seam tubes and lower board seam tubes, the upper board seam tubes are perpendicular to the temperature-control board pairs (31), inlaid in upper ends of the temperature-control board pairs (31) and communicated with the heat medium inlet (11), and the lower board seam tubes are perpendicular to the temperature-control board pairs (31), inlaid in lower ends of the temperature-control board pairs (31) and communicated with the heat medium outlet (12).

5. The temperature-control modular plate reactor according to claim 4, wherein the temperature-control modular plate reactor further comprises a first annular tube (51) arranged at an upper end of the reaction chamber (2) and a second annular tube (52) arranged at a lower end of the reaction chamber (2), the first annular tube (51) is communicated with the heat medium inlet (11) and is communicated with the upper board seam tubes through first branch tubes (53), and the second annular tube (52) is communicated with the heat medium outlet (12) and is communicated with the lower board seam tubes through second branch tubes (54).

6. The temperature-control modular plate reactor according to claim 5, wherein the first branch tubes (53) and the second branch tubes (54) are coil tubes.

7. The temperature-control modular plate reactor according to claim 4, 5 or 6, wherein each said grating (4) comprises arc section (41) and straight sections (42), wherein every two adjacent said straight sections (42) are connected through one said arc section (41), and the number of the arc sections (41) is consistent with that of the lower board seam tubes; and the gratings (4) are arranged above the lower board seam tubes, the arc sections (41) are cooperatively fixed to the lower board seam tubes, and ends of the straight sections (42) are fixed to the temperature-control modules (3).

8. The temperature-control modular plate reactor according to claim 7, wherein fixing plates are arranged at two ends of each said straight section (42) and are fixed to the temperature-control modules (3) with bolts.

9. The temperature-control modular plate reactor according to any one of claims 1-8, wherein the temperature-control modular plate reactor further comprises a cover plate (6) arranged around the temperature-control modules (3) and used for covering gaps between the temperature-control modules (3) and the shell (1).

10. The temperature-control modular plate reactor according to claim 9, wherein the temperature-control modular plate reactor further comprises a curved tube (7) having an end stretching into the cover plate (6) from below and an end stretching out of the shell (1), and the curved tube (7) is provided with a switch valve and is used for injecting an inert gas into the reaction chamber (2).
